# FASCICULE DE BREVET EUROPEEN

(11) **EP 3 014 848 B1**
(45) Date de publication et mention de la délivrance du brevet: **29.08.2018**
(21) Numéro de dépôt: 14749892.7
(22) Date de dépôt: 26.06.2014
(51) Int. Cl.: H04L 29/06, H04L 29/08

(54) **PROCÉDÉ DE GESTION DE TERMINAUX FIXES ET MOBILES DANS UN ENVIRONNEMENT COMPRENANT UN RÉSEAU MOBILE INCLUANT UN RÉSEAU IMS ET UN RÉSEAU D'ENTREPRISE**
VERFAHREN ZUR VERWALTUNG VON FESTEN UND MOBILEN ENDGERÄTEN IN EINER UMGEBUNG MIT EINEM MOBILEN NETZWERK MIT EINEM IMS-NETZ UND EINEM UNTERNEHMENSNETZWERK
METHOD FOR MANAGING FIXED AND MOBILE TERMINALS IN AN ENVIRONMENT COMPRISING A MOBILE NETWORK INCLUDING AN IMS NETWORK AND A COMPANY NETWORK

(30) Priorité: 27.06.2013 FR 1356242
(43) Date de publication de la demande: 04.05.2016
(73) Titulaire: Orange, 75015 Paris (FR)
(72) Inventeur: LABRANCHE, Miguel, F-94380 Bonneuil Sur Marne (FR); TOSSOU, Bruno, F-91230 Montgeron (FR)
(74) Mandataire: Cabinet Plasseraud
(86) Numéro de dépôt international: PCT/FR2014/051629
(87) Numéro de publication internationale: WO 2014/207395

(56) Documents cités:
- EP-A2- 1 968 334
- US-A1- 2010 182 997
- KIM LYNGGAARD LARSEN ET AL: "Corporate Convergence with the 3GPP IP Multimedia Subsystem", NEXT GENERATION MOBILE APPLICATIONS, SERVICES AND TECHNOLOGIES, 2007. NGMAST '07. THE 2007 INTERNATIONAL CONFERENCE ON, IEEE, PISCATAWAY, NJ, USA, 1 septembre 2007 (2007-09-01), pages 29-35, XP031142476, ISBN: 978-0-7695-2878-6
- "3rd Generation Partnership Project; Technical Specification Group Services and System Aspects; IP Multimedia Subsystem (IMS) centralized services; Stage 2 (Release 12)", 3GPP STANDARD; 3GPP TS 23.292, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V12.2.0, 22 juin 2013 (2013-06-22), pages 1-120, XP050692717,

## Description

L'invention se rapporte au domaine général des télécommunications.

Elle concerne plus précisément la gestion de terminaux fixes et mobiles dans un environnement comprenant un réseau mobile d'un opérateur incluant un réseau IMS (*IP Multimedia Subsystem*), un réseau d'entreprise incluant un équipement IP-PBX (*Internet Protocol-based Private Branch eXchange*), et un réseau IP (*Internet Protocol*) d'interconnexion entre le réseau d'entreprise et le réseau mobile.

En particulier, l'invention concerne un procédé de gestion de terminaux fixes et mobiles dans un tel environnement, ainsi qu'un serveur d'application du réseau IMS, dans lequel ce procédé est mis en oeuvre.

L'invention s'inscrit notamment dans le contexte de l'environnement désigné par VINE (*3GPP voice interworking with enterprise IP-PBX*) en cours de standardisation par le 3GPP et décrit en particulier dans le document 3GPP TR 22.809 intitulé "Feasibility study on support for 3GPP voice interworking with entreprise IP-PBX (VINE)", Release 11, V11.2.0, septembre 2011. Le document précité définit un modèle permettant à un réseau mobile d'un d'opérateur mobile d'inter fonctionner avec un réseau d'entreprise.

L'invention a en particulier une application privilégiée mais non limitative dans le cadre du service ICS (*IMS Centralized Service*) développé par l'organisme de standardisation 3GPP (*3rd Generation Partnership Project*), et décrit notamment dans le document 3GPP TS 23.292 intitulé "Technical Specification Group Services and System Aspects; IP Multimedia Subsystem (IMS) centralized services; Stage 2", Release 12, V12.1.0, mars 2013.

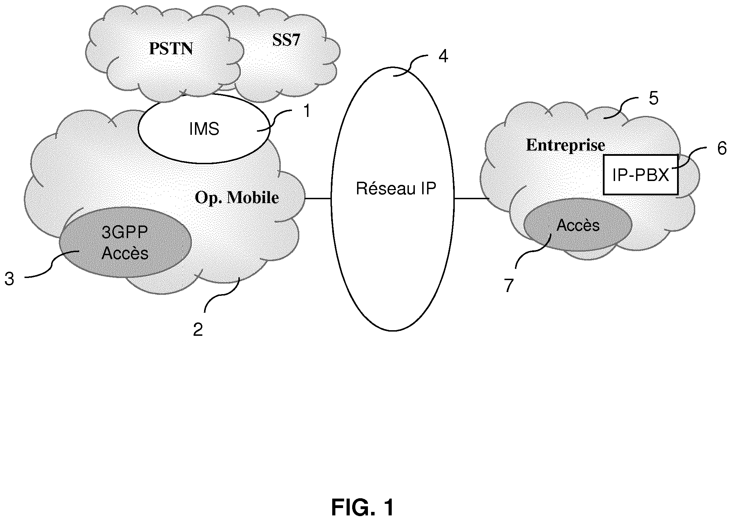

La **figure 1** issue du document 3GPP TR 22.809 illustre le modèle de référence de VINE. Comme représenté sur la figure 1, dans l'environnement modélisé, le réseau mobile de l'opérateur comprend un réseau IMS (1) qui est connecté à un réseau commuté public (PSTN) et un réseau de signalisation téléphonique SS7, et au moins un réseau d'accès mobile 3GPP (3).

Le réseau d'entreprise (5) comprend des réseaux d'accès (7) fixes et/ou sans fil et un équipement IP-PBX (6). Les réseaux d'accès sans fil peuvent être soit des réseaux d'accès sans fil 3GPP soit des réseaux d'accès sans fil non 3GPP (par exemple WLAN - *Wireless LAN*), et les réseaux d'accès fixes peuvent être de n'importe quel type d'accès IP fixe (*wired IP access*). Le réseau d'entreprise est connecté au coeur de réseau de l'opérateur mobile par l'intermédiaire d'un réseau IP en utilisant deux types de connexions : du réseau d'accès d'entreprise 7 vers le coeur de réseau de l'opérateur mobile 2 ; de l'équipement IP-PBX 6 vers le réseau IMS 1 de l'opérateur mobile. Un tel environnement est également décrit dans le document « Corporate Convergence with the 3GPP IP Multimedia Subsystem » de Kim Lynggaard Larsen et Al.

Dans le contexte d'un environnement tel que VINE, le réseau mobile de l'opérateur doit non seulement gérer les terminaux mobiles qui se connectent au réseau mobile via son ou ses réseaux d'accès mobile (3), mais il doit également gérer les terminaux du réseau d'entreprise impliqués dans des sessions de communications établies avec le coeur de réseau IMS (1) ou bien avec le coeur de réseau mobile (2).

Dans ces conditions, il existe un besoin - non couvert actuellement par les spécifications 3GPP pour VINE - d'un procédé de gestion de terminaux qui traite de la gestion de tous les terminaux connectés dans un tel environnement, qu'ils soient situés du côté entreprise ou du côté réseau mobile de l'opérateur. Une solution est proposée dans le document EP 1 968 334 avec un stockage, dans un routeur, d'informations caractéristiques des capacités d'un terminal à communiquer avec un autre, lorsque le terminal en question s'enregistre auprès du routeur. La présente invention est définie par les revendications indépendantes. La présente invention a notamment pour objectif de répondre au besoin exposé ci-dessus. A cet effet, elle concerne, selon un premier aspect, un procédé de gestion de terminaux fixes et mobiles dans un environnement comprenant un réseau mobile d'un opérateur incluant un réseau IMS, un réseau d'entreprise incluant un équipement IP-PBX, et un réseau IP d'interconnexion entre le réseau d'entreprise et le réseau mobile. Selon l'invention, ce procédé est mis en oeuvre dans un serveur de gestion et comporte des étapes consistant à :
- déterminer les terminaux mobiles du réseau mobile enregistrés auprès du réseau IMS, ainsi que les terminaux d'entreprise enregistrés auprès de l'équipement IP-PBX du réseau d'entreprise ;
- obtenir les capacités d'un terminal quelconque, déterminé comme étant enregistré auprès du réseau IMS ou auprès de l'équipement IP-PBX, lors de l'initialisation d'une session de communication multimédia via le réseau IMS impliquant ledit terminal, les capacités d'un terminal étant définies par au moins un paramètre parmi un ensemble de paramètres incluant un type de média accepté par le terminal et la bande passante nécessaire pour établir une session de communication multimédia avec ce terminal ;
- mettre à jour une base de données avec des informations identifiant les terminaux mobiles du réseau mobile enregistrés auprès du réseau IMS, et les terminaux d'entreprise enregistrés auprès de l'équipement IP-PBX, et avec des informations représentatives des capacités obtenues pour chaque terminal identifié.

Ainsi, grâce au procédé de gestion de terminaux selon l'invention, dans un environnement de télécommunications tel que l'environnement VINE, il est possible de disposer d'une base de données régulièrement mise à jour qui contient la liste des terminaux - du réseau mobile d'un opérateur et du réseau d'entreprise - suite à la détermination de leur enregistrement soit auprès du réseau IMS soit auprès de l'équipement IP-PBX du réseau d'entreprise, ainsi que pour chaque terminal de la liste, les capacités du terminal. De cette façon, grâce aux informations stockées dans la base de données maintenue par le serveur de gestion selon l'invention, on dispose dans ce type d'environnement d'un moyen de gestion centralisée mis en oeuvre par l'opérateur du réseau mobile.

Selon une caractéristique de réalisation de l'invention, le procédé comprend une étape de mise à disposition, sur requête d'un équipement déterminé dudit environnement, des informations stockées dans la base de données.

Ainsi, les informations stockées dans la base de données sont mises à disposition, sur requête d'un équipement déterminé de environnement - tel qu'un serveur d'application de service ou un terminal d'utilisateur - afin d'enrichir une application mise en oeuvre par cet équipement.

En particulier, selon des caractéristiques particulières de réalisation de l'invention :
- les terminaux mobiles enregistrés auprès du réseau IMS sont déterminés par interrogation d'un serveur SCC-AS (*Service Centralization and Continuity Application Server*) du réseau IMS, conforme au standard ICS (décrit dans le document 3GPP TS 23.292 susmentionné) ;
- les terminaux d'entreprise enregistrés dans l'équipement IP-PBX sont déterminés par le serveur de gestion suite à une communication avec l'équipement IP-PBX.

Ainsi, appliqué à l'environnement VINE, le serveur de gestion selon l'invention situé, selon un mode de réalisation, dans le réseau IMS, peut centraliser efficacement les informations d'enregistrement et de capacités de l'ensemble des terminaux de l'environnement. La base de données permet ainsi de stocker une information identifiant un terminal quelconque de l'environnement suite à un premier enregistrement du terminal, même si ce terminal se désenregistre ultérieurement.

Selon des modes de réalisation particuliers de l'invention, on pourra prévoir :
- que le serveur de gestion interroge périodiquement l'équipement IP-PBX selon un protocole de communication basé sur le protocole IP afin d'obtenir une liste de terminaux enregistrés auprès de l'équipement IP-PBX ; ou
- que lors de l'enregistrement d'un terminal du réseau d'entreprise auprès de l'équipement IP-PBX, le serveur de gestion reçoit en provenance de l'équipement IP-PBX un message d'information de l'enregistrement du terminal ; ou
- que l'équipement IP-PBX transmet périodiquement à destination du serveur de gestion une liste des terminaux d'entreprise enregistrés auprès de l'équipement IP-PBX.

Quel que soit le mode de réalisation choisi, ces modes permettent à la base de données mise à disposition par le serveur de gestion selon l'invention de fournir des informations sur l'enregistrement et les capacités des terminaux de l'environnement qui reflètent un état quasi instantané de l'environnement.

En particulier, on peut prévoir que la base de données soit mise à jour dès que l'enregistrement d'un terminal auprès du réseau IMS ou auprès de l'équipement IP-PBX, est déterminé.

En pratique, lors du désenregistrement d'un terminal, le terminal reste identifié dans la base de données, avec une information relative à son réseau d'appartenance, et une information relative à son état courant d'enregistrement ou de désenregistrement.

Selon un mode de réalisation de l'invention, les capacités d'un terminal identifié dans la base de données sont obtenues par l'intermédiaire du serveur SCC-AS à partir de l'analyse des messages de signalisation transmis par le terminal au cours de l'établissement d'une session de communication multimédia via le réseau IMS.

En particulier, selon un exemple de réalisation, les capacités d'un terminal sont obtenues par l'analyse des messages de signalisation transmis selon le protocole SDP (*Session Description Protocol*) au cours de l'établissement d'une session multimédia via le réseau IMS impliquant ce terminal.

Un telle session multimédia peut utiliser dans le cadre du standard ICS un protocole tel que SIP (*Session initiation Protocol*).

Selon un mode de réalisation particulier de l'invention, la base de données est mise à disposition par le serveur de gestion par l'intermédiaire d'une adresse web pointant sur la base de données et mise en oeuvre dans une interface de type API (*Application Programming Interface*) incorporée dans un serveur d'application de service sur le réseau IMS ou dans une application de service installée dans un terminal d'utilisateur.

De cette façon une application logicielle incorporée dans un terminal d'utilisateur ou dans un serveur d'application de service, dont le service mis en oeuvre nécessite de communiquer avec l'ensemble des terminaux du réseau mobile ou du réseau d'entreprise qui sont enregistrés ou peuvent s'enregistrer, ou de connaitre les capacités d'un ensemble déterminé de terminaux de l'environnement, pourra obtenir ces informations par requête auprès du serveur de gestion selon l'invention.

Corrélativement, selon un deuxième aspect, l'invention concerne un serveur de gestion de terminaux fixes et mobiles dans un environnement comprenant un réseau mobile d'un opérateur incluant un réseau IMS, un réseau d'entreprise incluant un équipement IP-PBX, et un réseau IP d'interconnexion entre le réseau d'entreprise et le réseau mobile. Conformément à l'invention, le serveur de gestion comprenant :
- un module de détermination des terminaux mobiles du réseau mobile enregistrés auprès du réseau IMS, et des terminaux d'entreprise enregistrés auprès de l'équipement IP-PBX du réseau d'entreprise ;
- un module d'obtention des capacités d'un terminal quelconque déterminé comme étant enregistré selon le cas, auprès du réseau IMS ou auprès de l'équipement IP-PBX, lors de l'initialisation d'une session de communication multimédia via le réseau IMS impliquant ledit terminal, les capacités d'un terminal étant définies par au moins un paramètre parmi un ensemble de paramètres incluant un type de média accepté par le terminal et la bande passante nécessaire pour établir une session de communication multimédia avec ce terminal ;
- un module de mise à jour d'une base de données avec des informations identifiant les terminaux mobiles du réseau mobile enregistrés auprès du réseau IMS, et les terminaux d'entreprise enregistrés auprès de l'équipement IP-PBX, et avec des informations représentatives des capacités obtenues pour chaque terminal identifié.

Selon des caractéristiques de réalisation de l'invention, ce serveur comprend des moyens adaptés à la mise en oeuvre d'un procédé de gestion de terminaux, tel qu'exposé plus haut, et en particulier un tel serveur comporte un module de mise à disposition des informations stockées dans la base de données, sur requête d'un équipement déterminé de l'environnement.

Selon un mode de réalisation particulier, le serveur de gestion selon l'invention est distinct d'un serveur SCC-AS défini par le standard ICS. Dans ce mode de réalisation, le serveur de gestion est apte à communiquer avec un tel serveur SCC-AS pour obtenir les informations d'enregistrement dans le réseau IMS des terminaux du réseau mobile.

Selon un autre mode de réalisation de l'invention, un tel serveur de gestion selon l'invention peut être est incorporé dans un serveur SCC-AS conforme au standard ICS.

Enfin selon un dernier aspect, la présente invention concerne aussi un programme d'ordinateur (ou ensemble de modules logiciels) stocké sur un support d'informations pour la mise en oeuvre d'un procédé de gestion de terminaux selon l'invention, tel que brièvement exposé plus haut. Ce programme peut être en particulier incorporé dans un serveur de gestion selon l'invention, situé, selon un mode de réalisation, dans un coeur de réseau IMS géré par un opérateur de réseau mobile, ou bien directement incorporé dans un serveur SCC-AS du réseau IMS.

Par ailleurs, un tel programme d'ordinateur selon l'invention, peut utiliser n'importe quel langage de programmation, et comprendre des programmes sous forme de code source, code objet, ou de code intermédiaire entre code source et code objet, tel que dans une forme partiellement compilée, ou dans n'importe quelle autre forme souhaitable.

L'invention vise aussi par conséquent un support d'enregistrement d'informations lisible par un ordinateur, et comportant des instructions de programme d'ordinateur. Un tel support d'enregistrement peut être constitué par n'importe quelle entité ou dispositif capable de stocker un tel programme. Par exemple, le support peut comporter un moyen de stockage, tel qu'une ROM, par exemple un CD ROM ou une ROM de circuit microélectronique, ou encore un moyen d'enregistrement amovible tel qu'une clé USB ou un moyen d'enregistrement magnétique, tel qu'un disque dur. D'autre part, il peut être prévu qu'un ensemble de modules logiciels selon l'invention soit accessible par téléchargement via un réseau de type Internet.

Les avantages procurés par le serveur de gestion précité, selon l'invention, et un programme d'ordinateur selon l'invention, tels que brièvement exposés plus haut, sont identiques ou contribuent à ceux déjà mentionnés en relation avec le procédé de gestion de terminaux, selon l'invention, et ne seront par conséquent pas rappelés ici.

D'autres caractéristiques et avantages de la présente invention ressortiront de la description détaillée qui suit, laquelle fait référence aux dessins annexés dans lesquels :
- la figure 1 déjà commentée est un schéma illustrant un environnement conforme au modèle VINE dans lequel un réseau mobile d'un opérateur interagit avec un réseau d'entreprise, et dans lequel l'invention peut être mise en oeuvre ;
- la figure 2 illustre de manière schématique un environnement de type VINE dans lequel est mis en oeuvre un procédé de gestion de terminaux conforme à l'invention ;
- la figure 3 est un organigramme illustrant les principales étapes d'un procédé de gestion de terminaux selon l'invention ;
- les figures 4 et 5 illustrent respectivement, sous forme de diagrammes d'échange, un premier et un second exemple d'utilisation d'une base de données exploitée par un serveur de gestion selon l'invention ; et
- la figure 6 illustre l'architecture matérielle d'un serveur de gestion conforme à l'invention, apte à mettre en oeuvre un procédé de gestion de terminaux selon l'invention.

La **figure 1** déjà commentée est un schéma illustrant un environnement conforme au modèle VINE dans lequel un réseau mobile d'un opérateur interagit avec un réseau d'entreprise, et dans lequel l'invention peut être mise en oeuvre. Le modèle VINE (*3GPP voice interworking with enterprise IP-PBX*) s'inscrit en particulier dans le cadre des services de communication définis par le standard ICS (*IMS Centralized Services*) défini dans le document 3GPP TS 23.292 mentionné plus haut.

De façon générale, le service ICS vise à offrir, via un coeur de réseau IMS, des services multimédias à un utilisateur mobile indépendamment du réseau d'accès avec lequel l'utilisateur est connecté (c'est-à-dire un réseau d'accès à commutation de circuits ou de paquets). Les utilisateurs de réseaux d'accès à commutation de circuits peuvent ainsi bénéficier de nouveaux services IMS tout en continuant de bénéficier des services traditionnellement offerts par les réseaux d'accès à commutation de circuits, ces services étant gérés par le coeur de réseau IMS. A cette fin, le service ICS s'appuie notamment sur le déclenchement d'un serveur d'application SCC-AS (*Service Centralization and Continuity Application Server*)*,* en charge d'assurer la continuité des services pour les différents réseaux d'accès. Les fonctionnalités du serveur SCC-AS sont décrites plus en détail dans le document 3GPP TS 24.292 intitulé "Technical Specification Group Core Network and Terminais; IP Multimedia (IM) Core Network (CN) subsystem Centralized Services (ICS); Stage 3 ", Release 11, V11.4.0, mars 2013.

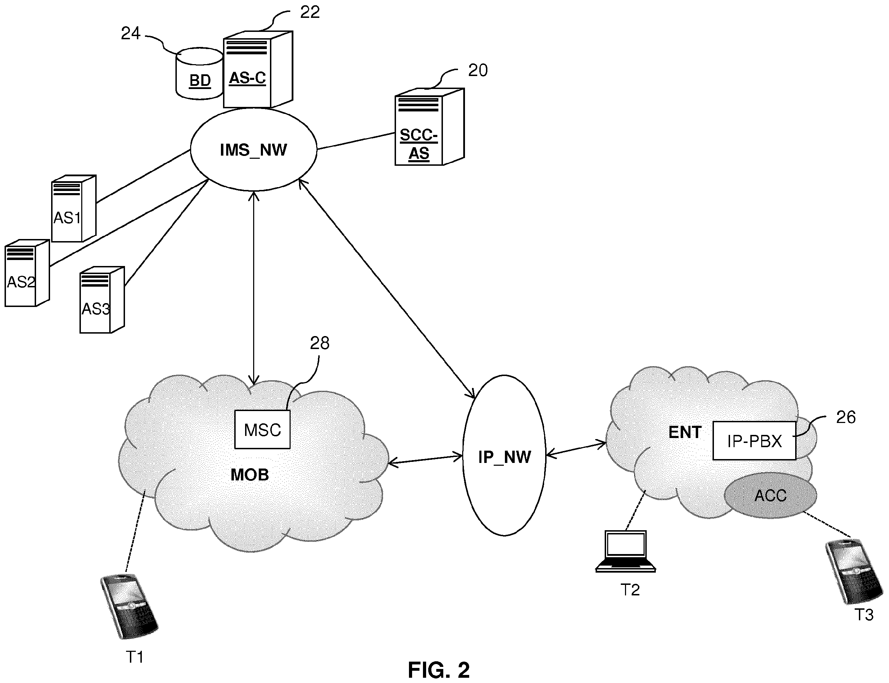

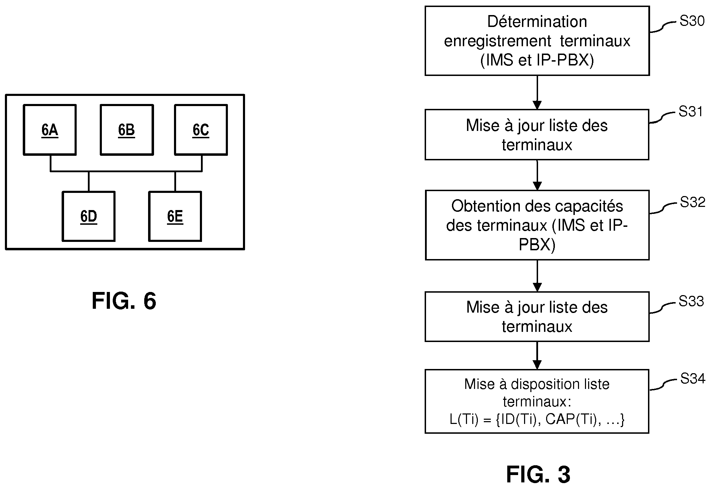

En liaison avec les **figures 2** et **3**, on va à présent détailler un exemple de mise en oeuvre d'un procédé de gestion de terminaux selon l'invention.

La **figure 2** illustre de manière schématique un environnement de type VINE dans lequel est mis en oeuvre un procédé de gestion de terminaux conforme à l'invention.

Dans l'exemple de réalisation choisi et illustré, le procédé de gestion de terminaux selon l'invention est mis en oeuvre dans un serveur de gestion 22 associé à une base de données BD (24) d'un réseau IMS (IMS_NW) faisant partie d'un réseau mobile (MOB) géré par un opérateur de téléphonie mobile. Le réseau mobile et le réseau IMS sont interconnectés avec un réseau d'entreprise ENT par l'intermédiaire d'un réseau IP (IP_NW). Le réseau IMS (IMS_NW) comprend un serveur SCC-AS (20) conforme aux spécifications définies dans les documents 3GPP TS 23.292 et 3GPP TS 24.292. Par ailleurs, des serveurs d'applications AS1-AS3 fournissant des services divers sont connectés au réseau IMS.

Le réseau mobile MOB inclus un équipement MSC (*Mobile Switching Centre*) enrichi pour supporter les fonctionnalités ICS (*enhanced MSC*). Pour obtenir plus de détails sur le fonctionnement de l'équipement MSC, on pourra se reporter par exemple au document 3GPP TS 29.292: "Interworking between the IP Multimedia (IM) Core Network (CN) subsystem and MSC Server for IMS Centralized Services (ICS)" (Release 11, V11.5.0, mars 2013). L'équipement MSC (28) est chargé notamment du routage d'un appel ou d'une session de communication dans le réseau mobile (MOB) et de l'interconnexion avec les autres réseaux (IMS, IP).

En particulier, l'équipement MSC (28) est impliqué dans le routage d'appels ou de sessions de communication multimédia, établis entre un terminal mobile T1 (smartphone, tablette, téléphone mobile, etc.) connecté au réseau mobile MOB, et un terminal fixe T2 (ordinateur portable, téléphone IP, ...) connecté au réseau d'entreprise ENT, ou un terminal mobile T3 (téléphone mobile d'entreprise par exemple) connecté au réseau ENT via un réseau d'accès sans fil (ACC).

Les communications dans le réseau d'entreprise sont gérés par un équipement IP-PBX 26 (*Internet Protocol-based Private Branch eXchange*) qui assure également les connexions des terminaux du réseau d'entreprise vers le réseau IMS (IMS_NW), via le réseau IP (IP_NW).

On notera ici que, dans le mode de réalisation choisi et présenté, le serveur de gestion (AS-C, 22) selon l'invention est situé sur le réseau IMS (IMS_NW), cependant on peut envisager d'autres modes de réalisation dans lesquels le serveur de gestion est connecté à un autre réseau, par exemple au coeur du réseau mobile (MOB), et communique via un équipement du réseau mobile, tel que le MSC (22), avec des équipements du réseau IMS tel que le serveur SCC-AS (20).

La **figure 3** est un organigramme illustrant les principales étapes du procédé de gestion de terminaux selon l'invention. Comme représenté à la figure 3, le procédé comprend une étape S30 de détermination de l'enregistrement auprès du réseau IMS des terminaux mobiles du réseau mobile, ainsi que de l'enregistrement des terminaux d'entreprise auprès de l'équipement IP-PBX (26) du réseau d'entreprise.

Pour obtenir l'information d'enregistrement concernant les terminaux mobiles du réseau mobile MOB, le serveur AS-C 22 interroge (mécanisme requête-réponse) le serveur SCC-AS (20) du réseau IMS, lequel serveur SCC-AS, intervenant dans le mécanisme d'enregistrement et de désenregistrement des terminaux mobiles (T1) auprès du réseau IMS, conformément aux standards IMS et ICS, dispose d'une liste mise à jour de manière continue de tous les terminaux du réseau MOB qui sont enregistrés à un instant donné.

Selon une variante de réalisation selon laquelle le serveur de gestion AS-C (22) est confondu avec le serveur SCC-AS (20) - c'est-à-dire que les fonctionnalités du serveur AS-C sont implémentées sous forme de modules additionnels dans le serveur SCC-AS - les informations d'enregistrement des terminaux mobiles auprès du réseau IMS sont directement accessibles dans le serveur de gestion.

Les procédures d'enregistrement/désenregistrement IMS d'un terminal mobile selon le standard ICS sont décrites en particulier sections 7.2.1.2 et 7.2.1.3 du document 3GPP TS 23.292.

Toujours à l'étape S30, le serveur AS-C détermine également les terminaux du réseau d'entreprise qui sont enregistrés auprès de l'équipement IP-PBX.

A cette fin, le serveur de gestion AS-C ou, selon l'implémentation choisie, le serveur SCC-AS lui-même, communique avec l'IP-PBX 26 pour obtenir la liste des terminaux d'entreprise (T2, T3, ...) enregistrés.

Selon un exemple de réalisation, le serveur de gestion AS-C interroge périodiquement l'IP-PBX selon un protocole de communication basé sur le protocole IP afin d'obtenir une liste de terminaux enregistrés auprès de l'IP-PBX. Ce protocole peut être par exemple un protocole standardisé tel que HTTP (*HyperText Transfer Protocol*) ou SIP (*Session Initiation Protocol*), ou encore un protocole propriétaire.

Selon une variante de réalisation, l'équipement IP-PBX peut être adapté de sorte que, lors de l'enregistrement d'un terminal de réseau d'entreprise auprès de l'équipement IP-PBX, ce dernier transmette via le réseau IP (IP_NW) au serveur de gestion AS-C, un message d'information de l'enregistrement du terminal.

Selon une autre variante de réalisation, l'équipement IP-PBX peut être adapté de sorte à transmettre périodiquement à destination du serveur de gestion une liste des terminaux d'entreprise enregistrés à un instant donné auprès de l'IP-PBX.

La variante précitée peut, par exemple, être mise en oeuvre dans l'IP-PBX par l'intermédiaire d'une commande, par exemple de la forme "*sip show registry*" (exemple de commande utilisée avec un IP-PBX Asterisk™), exécutée au travers d'un fichier batch, destinée à transmettre périodiquement à destination du serveur AS-C les informations relatives aux terminaux enregistrés auprès de l'IP-PBX.

Suite à l'obtention par le serveur de gestion AS-C des informations relatives à l'enregistrement des terminaux connectés au réseau MOB ou au réseau ENT, à l'étape S31, une liste de terminaux enregistrés est mise à jour dans la base de données 24 associée au serveur de gestion 22, avec en particulier un identifiant du terminal indiquant notamment le type de terminal, par exemple fonction du type de réseau d'accès et/ou de l'origine réseau (MOB, ENT) du terminal, et une information d'état d'enregistrement (actif ou inactif) du terminal auprès de l'équipement correspondant (SCC-AS ou IP-PBX).

On notera ici que la détection de l'enregistrement d'un terminal par le serveur de gestion AS-C selon les mécanismes exposés plus haut, est un processus permettant la "découverte" ou identification des terminaux présents dans l'environnement global. Une fois un terminal identifié lors de son premier enregistrement, celui-ci reste répertorié dans la liste maintenue dans la base de données 22. Par ailleurs, le terme "liste" est utilisé ici, pour représenter n'importe quel type de structure de données permettant de stocker les informations précitées concernant les terminaux de l'environnement (tableaux, arbres, etc.).

L'étape S32 suivante est une phase de "découverte" des capacités des terminaux de l'environnement global par le serveur de gestion AS-C. A cet effet, dans le mode de réalisation selon lequel les fonctionnalités du serveur AS-C sont mises en oeuvre dans le serveur SCC-AS, les capacités d'un terminal, préalablement enregistré auprès du réseau IMS ou auprès de l'équipement IP-PBX, selon le cas, sont obtenues par le serveur SCC-AS lors de l'initialisation d'une session de communication multimédia via le réseau IMS impliquant le terminal considéré. En pratique, on pourra utiliser des sessions de communication multimédia SIP, lesquelles transitent selon le standard ICS par l'équipement SCC-AS.

En particulier, les capacités d'un terminal visées sont définies par au moins un paramètre parmi un ensemble de paramètres incluant un type de média accepté par le terminal et la bande passante nécessaire pour établir une session de communication multimédia avec ce terminal. Cependant, d'autres types de paramètres relatifs aux capacités des terminaux peuvent être détectés, selon les modes de réalisation choisis, par exemple, des caractéristiques physiques du terminal telles que la taille de son écran.

Dans le cas où le serveur AS-C est distinct du serveur SCC-AS, alors l'obtention des capacités des terminaux enregistrés pourra être effectuée par interrogation du serveur SCC-AS par le serveur AS-C.

Dans le mode de réalisation choisi, les capacités d'un terminal identifié dans la base de données sont obtenues par l'intermédiaire du serveur SCC-AS à partir de l'analyse des messages de signalisation transmis par le terminal au cours de l'établissement d'une session de communication multimédia via le réseau IMS. En pratique, selon l'exemple de réalisation exposé ici, les sessions multimédias sont des sessions selon le protocole SIP et les messages de signalisation sont transmis selon le protocole SDP (*Session Description Protocol*) standardisé par l'IETF (*Internet Engineering Task Force*). Bien sûr, d'autres protocoles peuvent être utilisés dans le cadre de l'invention.

Plus précisément, des paramètres représentatifs des capacités d'un terminal pourront être extraits notamment des champs "*Session description*" et "*Media description*" d'un message SDP. En particulier, dans le champ "*Media description*" des informations concernant la bande passante et les codecs audio et vidéo utilisés par le terminal peuvent être extraites respectivement des sous-champs 'b=' et 'm='.

De retour à la figure 3, une fois obtenus les paramètres représentatifs des capacités d'un terminal considéré, ces paramètres sont enregistrés (étape S33) dans la base de données 24 maintenue par le serveur de gestion 22, en association avec des informations identifiant les terminaux mobiles du réseau mobile enregistrés auprès du réseau IMS, et les terminaux d'entreprise enregistrés auprès de l'équipement IP-PBX, par exemple sous la forme d'une liste ou tableau {ID(Ti), CAP(Ti), ...} où ID(Ti) désigne au moins un identifiant du terminal Ti et CAP(Ti) une liste de paramètres représentatifs de caractéristiques particulières du terminal Ti (capacités du terminal).

La base de données est ainsi mise à jour régulièrement avec des informations identifiant les terminaux de l'environnement global (réseaux MOB et ENT) et avec les capacités obtenues pour chaque terminal identifié de la base de données. En particulier, la base de données est mise à jour dès que l'enregistrement d'un nouveau terminal auprès du réseau IMS ou auprès de l'équipement IP-PBX, est déterminé.

L'étape suivante, S34, est la mise à disposition des informations stockées dans la liste de terminaux ainsi obtenue, par le serveur de gestion AS-C (22), sur requête d'un équipement déterminé de l'environnement. En particulier, selon un exemple de réalisation les informations stockées dans la base de données sont mises à disposition par le serveur de gestion par l'intermédiaire d'une adresse web (URL - *Uniform Resource Locator*) pointant sur un serveur web donnant accès à la base de données. Une telle adresse pour accéder à la base de données peut ainsi être mise en oeuvre dans une interface de type API (*Application Programming Interface*) incorporée dans un serveur d'application de service, tels que les serveurs AS1-AS3 (fig. 2), sur le réseau IMS ou dans une application de service installée dans un terminal d'utilisateur.

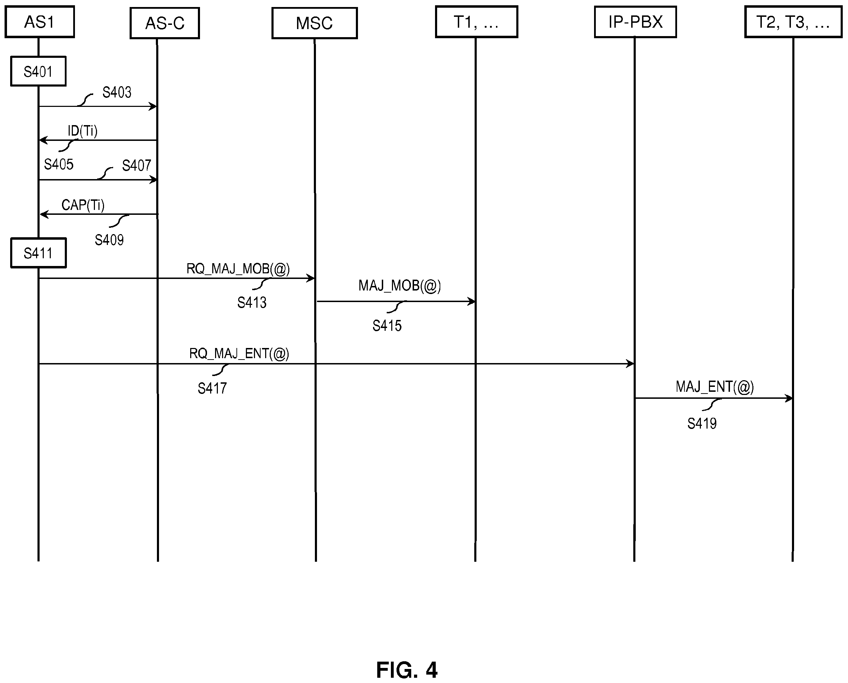

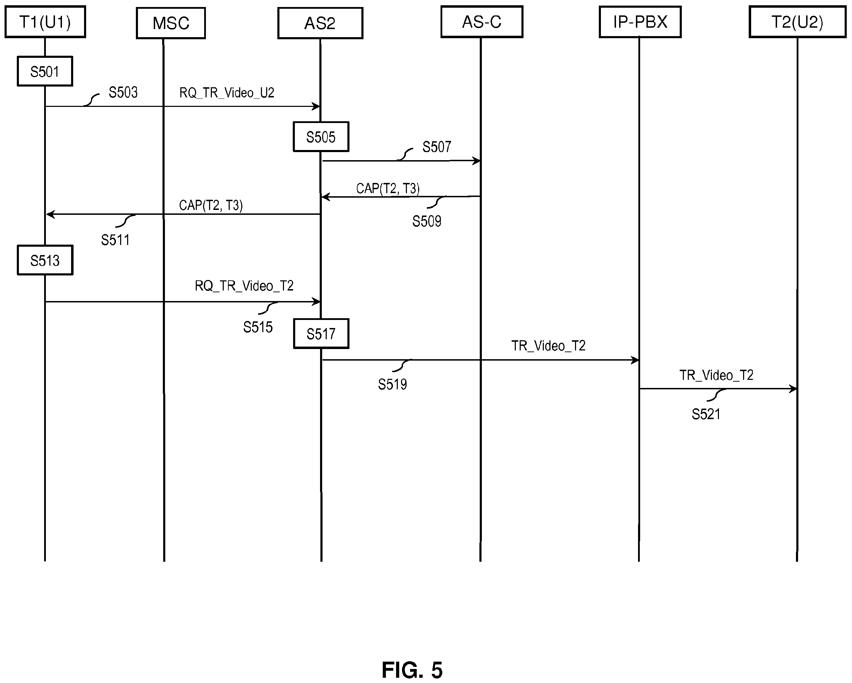

Les **figures 4** et **5** illustrent respectivement, sous forme de diagrammes d'échange, un premier et un second exemple d'utilisation d'une base de données exploitée par un serveur de gestion selon l'invention.

Dans l'exemple de la **figure 4**, l'environnement global de la figure 2 correspond à une entreprise, aussi bien pour la partie réseau mobile (MOB) que pour la partie réseau d'entreprise (ENT) proprement dite.

Un serveur d'application de service AS1 de l'entreprise, connecté au réseau IMS a notamment pour fonction de gérer les accès des terminaux à l'intranet de l'entreprise. Dans cet exemple, un opérateur du serveur AS1 déclenche l'exécution d'une commande dans le serveur AS1 (étape S401) afin de lancer un processus de mise à jour d'une adresse (URL) d'accès à l'intranet de l'entreprise.

A l'étape S403, le serveur AS1 envoie une requête à destination du serveur de gestion AS-C afin de récupérer la liste des identifiants (ID(Ti)) de l'ensemble des terminaux d'utilisateur qui peuvent se connecter au réseau dans son ensemble (MOB, ENT). Le serveur AS-C récupère la liste demandée auprès de la base de données (24) et la transmet (S405) au serveur AS1. De manière similaire (étapes S407, S409), le serveur AS1 obtient du serveur de gestion AS-C les informations (CAP(Ti)) relatives aux capacités des terminaux identifiés dans la liste des identifiants (ID(Ti)) récupérée. A l'étape S411, le serveur AS1 détermine en fonction des informations de capacités des terminaux, ceux qui sont équipés de navigateurs web permettant d'accéder à l'intranet de l'entreprise.

En conséquence, à l'étape S413, le serveur AS1 transmet à destination de l'équipement MSC du réseau mobile une requête (RQ_MAJ_MOB(@)) de mise à jour de l'URL d'accès à l'intranet pour l'ensemble des terminaux mobiles du réseau MOB qui sont équipés de navigateurs. La requête précitée est traitée par le MSC, et, pour chaque terminal mobile (T1) de cet ensemble, une commande (MAJ_MOB(@)) est envoyée (S415) à destination du terminal (T1), provoquant dans le terminal la mise à jour de l'URL d'accès à l'intranet.

De même, à l'étape S417, le serveur AS1 transmet à destination de l'équipement IP-PBX du réseau d'entreprise (ENT) une requête (RQ_MAJ_ENT(@)) de mise à jour de l'URL d'accès à l'intranet pour l'ensemble des terminaux (mobiles ou fixes) du réseau d'entreprise (ENT) qui sont équipés de navigateurs. La requête précitée est traitée par l'IP-PBX, et, pour chaque terminal (T2, T3) de cet ensemble, une commande (MAJ_ENT(@)) est envoyée (S419) à destination du terminal, provoquant dans le terminal la mise à jour de l'URL d'accès à l'intranet.

Dans l'exemple d'utilisation de la **figure 5**, un utilisateur U1 du terminal mobile de type *smartphone* T1 connecté au réseau mobile MOB, accède via sont terminal sur un site de stockage de contenus hébergé par le serveur d'application de service AS2 sur le réseau IMS (fig. 2), et choisit une vidéo (étape S501) qu'il désire partager avec un autre utilisateur U2.

A cet effet, une requête (RQ_TR_Video_U2) de partage de contenu est envoyée (S503) par le terminal T1 à destination du serveur AS2. Ce dernier extrait (S505) de la requête un identifiant de l'utilisateur U2, et envoie (S507) en conséquence à destination du serveur de gestion AS-C, une requête d'obtention des informations des terminaux associés à l'utilisateur U2.

En retour (S509), le serveur AS2 reçoit du serveur AS-C les informations (CAP(T2, T3)) relatives aux capacités de deux terminaux T2 (PC portable) et T3 (téléphone mobile) identifiés pour l'utilisateur U2, ces deux terminaux étant associés au réseau d'entreprise ENT. Les informations de capacités (CAP(T2, T3)) des terminaux T2 et T3 sont ensuite envoyées par le serveur d'application AS2 au terminal T1 de l'utilisateur U1 (S511).

A l'étape S513, l'utilisateur U1 choisit d'envoyer la vidéo au terminal T2 de l'utilisateur U2, ce terminal disposant de capacités supérieures pour la restitution de la vidéo (taille et résolution de l'écran). En conséquence, l'utilisateur U1 déclenche l'envoi (S515) par son terminal (T1) à destination du serveur AS2 d'une requête de transfert de la vidéo (RQ_TR_Video_T2) au terminal T2 de U2.

La requête précitée de transfert de la vidéo est alors traitée (S517) par le serveur AS2 puis transformée en une commande de transfert de la vidéo (TR_Vidéo_T2) - sous forme d'un lien (URL) à télécharger, par exemple -, envoyée (S519) à destination de l'IP-PBX.

Enfin à l'étape S521, l'IP-PBX transfert la commande de transfert de la vidéo (TR_Vidéo_T2) à destination du terminal T2. L'utilisateur U2 peut alors consulter la vidéo à l'écran de son PC portable T2.

La **figure 6** illustre l'architecture matérielle d'un serveur de gestion conforme à l'invention, apte à mettre en oeuvre un procédé de gestion de terminaux selon l'invention.

Dans le mode de réalisation décrit ici, le serveur de gestion dispose de l'architecture matérielle d'un ordinateur ; il comporte notamment un processeur 6A, une mémoire morte 6B, une mémoire vive 6C, une mémoire non volatile 6D (disque dur par exemple) et des moyens de communication 6E avec, notamment, les entités du réseau IMS, en particulier le serveur SCC-AS et des serveurs d'applications (AS1-AS3) fournissant sur le réseau IMS des services pouvant utiliser les informations de la base de données 24. Ces moyens de communication 6E intègrent par exemple une carte réseau, connue en soi et non détaillée ici.

La mémoire morte 6B du serveur de gestion constitue un support d'enregistrement conforme à l'invention, lisible par le processeur 6A et sur lequel est enregistré un programme d'ordinateur conforme à l'invention, comportant des instructions pour l'exécution des étapes d'un procédé de gestion de terminaux conforme à l'invention, décrites précédemment en référence à la figure 3.

Ce programme d'ordinateur définit de façon correspondante des modules fonctionnels du serveur de gestion aptes à mettre en oeuvre ces étapes, et en particulier : un module de détermination des terminaux mobiles du réseau mobile enregistrés auprès du réseau IMS, et des terminaux d'entreprise enregistrés auprès de l'équipement IP-PBX du réseau d'entreprise ; un module d'obtention des capacités d'un terminal quelconque déterminé comme étant enregistré selon le cas, auprès du réseau IMS ou auprès de l'équipement IP-PBX, lors de l'initialisation d'une session de communication multimédia via le réseau IMS impliquant le terminal considéré - les capacités d'un terminal étant définies par au moins un paramètre parmi un ensemble de paramètres incluant un type de média accepté par le terminal et la bande passante nécessaire pour établir une session de communication multimédia avec ce terminal ; un module de mise à jour d'une base de données avec des informations identifiant les terminaux mobiles du réseau mobile enregistrés auprès du réseau IMS, et les terminaux d'entreprise enregistrés auprès de l'équipement IP-PBX, et avec des informations représentatives des capacités obtenues pour chaque terminal identifié ; et, dans le mode de réalisation choisi et illustré, un module de mise à disposition des informations stockées dans la base de données, sur requête d'un équipement déterminé de l'environnement.

Selon les modes de réalisation envisagés, tout ou partie des modules précités constitutifs du serveur de gestion selon l'invention peuvent être implémentés dans un serveur SCC-AS conforme au standard ICS.

## Revendications

1. Procédé de gestion de terminaux fixes et mobiles dans un environnement comprenant un réseau mobile d'un opérateur incluant un réseau IP Multimedia Subsystem, IMS, un réseau d'entreprise incluant un équipement Internet Protocol-based Private Branch Exchange, IP-PBX, et un réseau Internet Protocol, IP, d'interconnexion entre le réseau d'entreprise et le réseau mobile, le procédé étant mis en oeuvre dans un serveur de gestion et comportant des étapes consistant à :
- déterminer (S30) les terminaux mobiles du réseau mobile enregistrés auprès du réseau IMS, ainsi que les terminaux d'entreprise enregistrés auprès de l'équipement IP-PBX du réseau d'entreprise ;
- obtenir (S32) les capacités d'un terminal quelconque déterminé comme étant enregistré selon le cas, auprès du réseau IMS ou auprès de l'équipement IP-PBX, lors de l'établissement d'une session de communication multimédia via le réseau IMS impliquant ledit terminal, les capacités d'un terminal étant définies par au moins un paramètre parmi un ensemble de paramètres incluant un type de média accepté par le terminal et la bande passante nécessaire pour établir une session de communication multimédia avec ce terminal ;
- mettre à jour (S31, S33) une base de données avec des informations identifiant les terminaux mobiles du réseau mobile enregistrés auprès du réseau IMS, et les terminaux d'entreprise enregistrés auprès de l'équipement IP-PBX, et avec des informations représentatives des capacités obtenues pour chaque terminal identifié.

2. Procédé selon la revendication 1, comprenant en outre une étape de mise à disposition (S34), sur requête d'un équipement déterminé dudit environnement, des informations stockées dans la base de données.

3. Procédé selon la revendication 1 ou 2, dans lequel les terminaux mobiles enregistrés auprès du réseau IMS sont déterminés par interrogation d'un serveur Service Centralization and Continuity Application Server, SCC-AS, du réseau IMS, conforme au standard IMS Centralized Service, ICS.

4. Procédé selon l'une quelconque des revendications 1 à 3, dans lequel les terminaux d'entreprise enregistrés dans l'équipement IP-PBX sont déterminés par le serveur de gestion suite à une communication avec l'équipement IP-PBX.

5. Procédé selon la revendication 4, dans lequel le serveur de gestion interroge périodiquement l'équipement IP-PBX selon un protocole de communication basé sur le protocole IP afin d'obtenir une liste de terminaux enregistrés auprès de l'équipement IP-PBX.

6. Procédé selon la revendication 4, dans lequel, lors de l'enregistrement d'un terminal de réseau d'entreprise auprès de l'équipement IP-PBX, le serveur de gestion reçoit en provenance de l'équipement IP-PBX un message d'information de l'enregistrement du terminal.

7. Procédé selon la revendication 4, dans lequel l'équipement IP-PBX transmet périodiquement à destination du serveur de gestion une liste des terminaux d'entreprise enregistrés auprès de l'équipement IP-PBX.

8. Procédé selon l'une quelconque des revendications 3 à 7, dans lequel les capacités d'un terminal identifié dans la base de données sont obtenues par l'intermédiaire dudit serveur SCC-AS à partir de l'analyse des messages de signalisation transmis par ledit terminal au cours de l'établissement d'une session de communication multimédia via le réseau IMS.

9. Procédé selon la revendication 8, dans lequel les messages de signalisation sont transmis selon le protocole SDP, *Session Description Protocol.*

10. Procédé selon l'une quelconque des revendications 1 à 9, dans lequel ladite base de données est mise à jour dès que l'enregistrement d'un terminal auprès du réseau IMS ou auprès de l'équipement IP-PBX, est déterminé.

11. Procédé selon l'une quelconque des revendications 2 à 10, dans lequel ladite base de données est mise à disposition par ledit serveur de gestion par l'intermédiaire d'une adresse web pointant sur ladite base de données et mise en oeuvre dans une interface de type API incorporée dans un serveur d'application de service sur le réseau IMS ou dans une application de service installée dans un terminal d'utilisateur.

12. Serveur de gestion de terminaux fixes et mobiles dans un environnement comprenant un réseau mobile d'un opérateur incluant un réseau IP Multimedia Subsystem, IMS, un réseau d'entreprise incluant un équipement Internet Protocol-based Private Branch Exchange, IP-PBX, et un réseau Internet Protocol, IP, d'interconnexion entre le réseau d'entreprise et le réseau mobile, ledit serveur de gestion comprenant :
- un module de détermination des terminaux mobiles du réseau mobile enregistrés auprès du réseau IMS, et des terminaux d'entreprise enregistrés auprès de l'équipement IP-PBX du réseau d'entreprise ;
- un module d'obtention des capacités d'un terminal quelconque déterminé comme étant enregistré selon le cas, auprès du réseau IMS ou auprès de l'équipement IP-PBX, lors de l'établissement d'une session de communication multimédia via le réseau IMS impliquant ledit terminal, les capacités d'un terminal étant définies par au moins un paramètre parmi un ensemble de paramètres incluant un type de média accepté par le terminal et la bande passante nécessaire pour établir une session de communication multimédia avec ce terminal ;
- un module de mise à jour d'une base de données avec des informations identifiant les terminaux mobiles du réseau mobile enregistrés auprès du réseau IMS, et les terminaux d'entreprise enregistrés auprès de l'équipement IP-PBX, et avec des informations représentatives des capacités obtenues pour chaque terminal identifié.

13. Serveur selon la revendication 12, comprenant en outre un module de mise à disposition des informations stockées dans la base de données, sur requête d'un équipement déterminé dudit environnement.

14. Serveur Service Centralization and Continuity Application Server, SCC-AS, conforme au standard IMS Centralized Service, ICS, ledit serveur comprenant un serveur de gestion selon la revendication 12 ou 13.

15. Programme d'ordinateur stocké sur un support d'informations pour la mise en oeuvre d'un procédé selon l'une quelconque des revendications 1 à 10, lorsque le programme est exécuté par un processeur.

## Patentansprüche

1. Verfahren zur Verwaltung von festen und mobilen Endgeräten in einer Umgebung, die ein Mobilfunknetz eines Betreibers mit einem IP Multimedia Subsystem, IMS, -Netz, ein Unternehmensnetz mit einer Internet Protocol-based Private Branch Exchange, IP-PBX, -Anlage und ein Internet Protocol, IP, -Netz zur Verbindung zwischen dem Unternehmensnetz und dem Mobilfunknetz umfasst, wobei das Verfahren in einem Verwaltungsserver durchgeführt wird und folgende Schritte umfasst:
- Bestimmen (S30) der mobilen Endgeräte des Mobilfunknetzes, die in dem IMS-Netz registriert sind, sowie der Unternehmensendgeräte, die in der IP-PBX-Anlage des Unternehmensnetzes registriert sind;
- Erhalten (S32) der Kapazitäten eines beliebigen Endgerätes, welches je nach Fall in dem IMS-Netz oder in der IP-PBX-Anlage registriert ist, beim Aufbau einer Multimedia-Kommunikationssitzung über das IMS-Netz unter Einbeziehung dieses Endgerätes, wobei die Kapazitäten eines Endgerätes durch wenigstens einen Parameter aus einer Menge von Parametern definiert sind, die einen von dem Endgerät akzeptierten Medientyp und den erforderlichen Durchlassbereich zum Aufbauen einer Multimedia-Kommunikationssitzung mit diesem Endgerät beinhaltet;
- Aktualisieren (S31, S33) einer Datenbank mit Informationen, welche die in dem IMS-Netz registrierten mobilen Endgeräte des Mobilfunknetzes und die in der IP-PBX-Anlage registrierten Unternehmensendgeräte identifizieren, und mit Informationen, welche für die für jedes identifizierte Endgerät erhaltenen Kapazitäten repräsentativ sind.

2. Verfahren nach Anspruch 1, welches außerdem einen Schritt der Bereitstellung (S34), auf Anforderung einer bestimmten Einrichtung der Umgebung, der in der Datenbank gespeicherten Informationen umfasst.

3. Verfahren nach Anspruch 1 oder 2, wobei die in dem IMS-Netz registrierten mobilen Endgeräte durch Abfrage eines Servers Service Centralization and Continuity Application Server, SCC-AS, des IMS-Netzes, der mit dem IMS Centralized Service, ICS, -Standard konform ist, bestimmt werden.

4. Verfahren nach einem der Ansprüche 1 bis 3, wobei die in der IP-PBX-Anlage registrierten Unternehmensendgeräte von dem Verwaltungsserver im Anschluss an eine Kommunikation mit der IP-PBX-Anlage bestimmt werden.

5. Verfahren nach Anspruch 4, wobei der Verwaltungsserver die IP-PBX-Anlage periodisch gemäß einem auf dem IP-Protokoll basierenden Kommunikationsprotokoll abfragt, um eine Liste von in der IP-PBX-Anlage registrierten Endgeräten zu erhalten.

6. Verfahren nach Anspruch 4, wobei bei der Registrierung eines Endgerätes des Unternehmensnetzes in der IP-PBX-Anlage der Verwaltungsserver von der IP-PBX-Anlage eine Informationsnachricht über die Registrierung des Endgerätes empfängt.

7. Verfahren nach Anspruch 4, wobei die IP-PBX-Anlage periodisch eine Liste der in der IP-PBX-Anlage registrierten Unternehmensendgeräte zum Verwaltungsserver überträgt.

8. Verfahren nach einem der Ansprüche 3 bis 7, wobei die Kapazitäten eines in der Datenbank identifizierten Endgerätes über den SCC-AS-Server aus der Analyse der Signalisierungsnachrichten erhalten werden, die von dem Endgerät beim Aufbau einer Multimedia-Kommunikationssitzung über das IMS-Netz übertragen werden.

9. Verfahren nach Anspruch 8, wobei die Signalisierungsnachrichten gemäß dem Protokoll SDP, Session Description Protocol, übertragen werden.

10. Verfahren nach einem der Ansprüche 1 bis 9, wobei die Datenbank aktualisiert wird, sobald die Registrierung eines Endgerätes im IMS-Netz oder in der IP-PBX-Anlage bestimmt worden ist.

11. Verfahren nach einem der Ansprüche 2 bis 10, wobei die Datenbank von dem Verwaltungsserver über eine Webadresse zur Verfügung gestellt wird, die auf die Datenbank zeigt und in einer API-Schnittstelle ausgeführt wird, die in einen Dienstanwendungsserver im IMS-Netz oder in eine in einem Benutzerendgerät installierte Dienstanwendung integriert ist.

12. Verwaltungsserver für feste und mobile Endgeräte in einer Umgebung, die ein Mobilfunknetz eines Betreibers mit einem IP Multimedia Subsystem, IMS, -Netz, ein Unternehmensnetz mit einer Internet Protocol-based Private Branch Exchange, IP-PBX, - Anlage und ein Internet Protocol, IP, -Netz zur Verbindung zwischen dem Unternehmensnetz und dem Mobilfunknetz umfasst, wobei der Verwaltungsserver umfasst:
- ein Modul zur Bestimmung der mobilen Endgeräte des Mobilfunknetzes, die in dem IMS-Netz registriert sind, und der Unternehmensendgeräte, die in der IP-PBX-Anlage des Unternehmensnetzes registriert sind;
- ein Modul zum Erhalten der Kapazitäten eines beliebigen Endgerätes, welches je nach Fall in dem IMS-Netz oder in der IP-PBX-Anlage registriert ist, beim Aufbau einer Multimedia-Kommunikationssitzung über das IMS-Netz unter Einbeziehung dieses Endgerätes, wobei die Kapazitäten eines Endgerätes durch wenigstens einen Parameter aus einer Menge von Parametern definiert sind, die einen von dem Endgerät akzeptierten Medientyp und den erforderlichen Durchlassbereich zum Aufbauen einer Multimedia-Kommunikationssitzung mit diesem Endgerät beinhaltet;
- ein Modul zur Aktualisierung einer Datenbank mit Informationen, welche die in dem IMS-Netz registrierten mobilen Endgeräte des Mobilfunknetzes und die in der IP-PBX-Anlage registrierten Unternehmensendgeräte identifizieren, und mit Informationen, welche für die für jedes identifizierte Endgerät erhaltenen Kapazitäten repräsentativ sind.

13. Server nach Anspruch 12, welcher außerdem ein Modul zur Bereitstellung der in der Datenbank gespeicherten Informationen auf Anforderung einer bestimmten Einrichtung der Umgebung umfasst.

14. Server Service Centralization and Continuity Application Server, SCC-AS, der mit dem IMS Centralized Service, ICS, -Standard konform ist, wobei der Server einen Verwaltungsserver nach Anspruch 12 oder 13 umfasst.

15. Computerprogramm, welches auf einem Datenträger gespeichert ist, zur Durchführung eines Verfahrens nach einem der Ansprüche 1 bis 10, wenn das Programm von einem Prozessor ausgeführt wird.

## Claims

1. Method for managing fixed and mobile terminals in an environment comprising a mobile network of an operator including an IP Multimedia Subsystem, IMS, network, a business network including an Internet Protocol-based Private Branch Exchange, IP-PBX, device and an Internet Protocol, IP, network for interconnection between the business network and the mobile network, the method being implemented in a management server and including steps of:
- determining (S30) the mobile terminals of the mobile network that are registered with the IMS network, and the business terminals that are registered with the IP-PBX device of the business network;
- obtaining (S32) the capabilities of any terminal determined as being registered, as the case may be, with the IMS network or with the IP-PBX device, upon the establishment of a multimedia communication session via the IMS network involving said terminal, the capabilities of a terminal being defined by at least one parameter from among a set of parameters including a media type accepted by the terminal and the bandwidth necessary to establish a multimedia communication session with this terminal;
- updating (S31, S33) a database with information identifying the mobile terminals of the mobile network that are registered with the IMS network, and the business terminals that are registered with the IP-PBX device, and with information representative of the capabilities obtained for each identified terminal.

2. Method according to Claim 1, furthermore comprising a step (S34) of making available, upon the request of a given device of said environment, the information stored in the database.

3. Method according to Claim 1 or 2, wherein the mobile terminals registered with the IMS network are determined by interrogating a Service Centralization and Continuity Application Server, SCC-AS, of the IMS network, in accordance with the IMS Centralized Service, ICS, standard.

4. Method according to any one of Claims 1 to 3, wherein the business terminals registered in the IP-PBX device are determined by the management server following a communication with the IP-PBX device.

5. Method according to Claim 4, wherein the management server periodically interrogates the IP-PBX device in accordance with a communication protocol based on the IP protocol in order to obtain a list of terminals registered with the IP-PBX device.

6. Method according to Claim 4, wherein, upon the registration of a business network terminal with the IP-PBX device, the management server receives, from the IP-PBX device, a message informing of the registration of the terminal.

7. Method according to Claim 4, wherein the IP-PBX device periodically transmits, to the management server, a list of the business terminals registered with the IP-PBX device.

8. Method according to any one of Claims 3 to 7, wherein the capabilities of a terminal identified in the database are obtained by way of said SCC-AS server by analysing the signalling messages transmitted by said terminal during the establishment of a multimedia communication session via the IMS network.

9. Method according to Claim 8, wherein the signalling messages are transmitted in accordance with the Session Description Protocol, SDP, protocol.

10. Method according to any one of Claims 1 to 9, wherein said database is updated as soon as the registration of a terminal with the IMS network or with the IP-PBX device is determined.

11. Method according to any one of Claims 2 to 10, wherein said database is made available by said management server by way of a web address pointing to said database and implemented in an API interface incorporated into a service application server on the IMS network or in a service application installed in a user terminal.

12. Server for managing fixed and mobile terminals in an environment comprising a mobile network of an operator including an IP Multimedia Subsystem, IMS, network, a business network including an Internet Protocol-based Private Branch Exchange, IP-PBX, device and an Internet Protocol, IP, network for interconnection between the business network and the mobile network, said management server comprising:
- a module for determining the mobile terminals of the mobile network that are registered with the IMS network, and the business terminals that are registered with the IP-PBX device of the business network;
- a module for obtaining the capabilities of any terminal determined as being registered, as the case may be, with the IMS network or with the IP-PBX device, upon the establishment of a multimedia communication session via the IMS network involving said terminal, the capabilities of a terminal being defined by at least one parameter from among a set of parameters including a media type accepted by the terminal and the bandwidth necessary to establish a multimedia communication session with this terminal;
- a module for updating a database with information identifying the mobile terminals of the mobile network that are registered with the IMS network, and the business terminals that are registered with the IP-PBX device, and with information representative of the capabilities obtained for each identified terminal.

13. Server according to Claim 12, furthermore comprising a module for making available the information stored in the database upon the request of a given device of said environment.

14. Service Centralization and Continuity Application Server, SCC-AS, in accordance with the IMS Centralized Service, ICS, standard, said server comprising a management server according to Claim 12 or 13.

15. Computer program stored on an information medium for implementing a method according to any one of Claims 1 to 10 when the program is executed by a processor.
